# EUROPEAN PATENT SPECIFICATION

(11) **EP 2 053 879 B1**
(45) Date of publication and mention of the grant of the patent: **08.06.2011**
(21) Application number: 07021031.5
(22) Date of filing: 26.10.2007
(51) Int. Cl.: H04W 48/10

(54) **Compressed signalling of parameter values for base stations**
Komprimierte Signalisierung von Parameterwerten für Basisstationen
Signalisation compressée de valeurs de paramètres pour stations de base

(43) Date of publication of application: 29.04.2009
(73) Proprietor: Nokia Siemens Networks Oy, 02610 Espoo (FI)
(72) Inventor: Breuer, Volker, Dr., 16727 Bötzow (DE); Stadler, Thomas, 1130 Wien (AT); Ulrich, Thomas, 67098 Bad Dürkheim (DE); Vesely, Alexander, 8330 Feldbach (DE)
(74) Representative: Bruglachner, Thomas E.

(56) References cited:
- EP-A- 1 655 908
- US-A- 5 666 650
- US-A1- 2006 142 016

## Description

### Field of invention

The present invention generally relates to the field of cellular telecommunication networks. In particular, the present invention relates to a method for signaling an individual value of a characteristic parameter for each of a plurality of base stations of a cellular telecommunication network to at least one User Equipment being assigned to the telecommunication network. Further, the present invention relates to a base station, a User Equipment and a telecommunication network, which are adapted for carrying out the above described signaling method.

### Art Background

In a cellular mobile telecommunication system it is necessary to apply procedures for determining the mobility of mobile User Equipments (UE), for reselecting cells and for controlling UE handovers in order to allow an UE to be served by a cell respectively by a base station, which is at the time of evaluation is the best for radio communication. Thereby, the UE monitors cells, which might be suitable for serving the UE and for each cell that is monitored, an offset can be assigned. The offset is often conceived as a prioritization mechanism. In case of handover measurements the offset is added to the measurement quantity. This means that when considering the offset of a cell respectively of the corresponding base station the size of the cell will be artificially scaled up or down.

In particular for UMTS Terrestrial Radio Access Networks (UTRAN) and GSM/Edge Radio Access Networks (GERAN) information about neighboring cells can be provided by the serving base station. This can be done by transmitting a so called neighbor cell list (NCL), which may contain cell specific cell reselection parameters such as a value for the above described offset for specific base stations being assigned to neighboring cells. These offset values are signaled over the Broadcast Channel (BCH) to each UE. Therefore, signaling the offset values for each neighboring base station significantly contributes to the data transmission load on the BCH.

US 2006/0142016 discloses a method for operation a mobile telecommunications system, wherein at least one first radio cell comprising a base station and radio cells that are adjacent to it. A sub-group of the adjacent radio cells is determined depending on the position of a mobile station in the first radio cell. The mobile station subsequently measures a quality parameter of only those signals of the base stations associated with the sub-groups of the adjacent radio cells.

As specified in the 3GPP technical specification 3GPP TS 25.331, V7.5.0 (2007-06) the UE receives the cell individual offsets for each primary Common Pilot Channel (CPICH) in Frequency Division Duplex (FDD) or for each Common Control Physical Channel (CCPCH) in Time Division Duplex (TDD) in the Information Element (IE) "Cell individual offset" included in the superior Information Element "Cell info". The IE "Cell info" is associated with each measurement object included in a measurement control message and is also contained in the IE "Inter-frequency cell info list" and the IE "Intra-frequency cell info list" in system information block 11 and 12, which is transmitted over the BCH. This means that in UMTS the way offset values are signaled on the BCH wastes radio resources as to each cell ID the corresponding offset value is signaled.

As capacity is a scarce resource in mobile radio telecommunication systems optimization of transmitted information is always targeted. It is therefore important to transmit information as optimized as possible over the radio interface. Especially as in next generation mobile telecommunication networks so far existing networks need to be supported thus the list of cells to be included in the BCH is increased. Especially in UMTS the cell individual offset is widely used being defined for each cell.

There may be a need for improving the signaling of parameter values for neighboring base stations from a serving base station to UE being served by the serving base station.

### Summary of the Invention

This need may be met by the subject matter according to the independent claims. Advantageous embodiments of the present invention are described by the dependent claims.

According to a first aspect of the invention there is described a method for signaling an individual value of a characteristic parameter for each of a plurality of base stations of a cellular telecommunication network to at least one User Equipment being assigned to the telecommunication network. The described method comprises (a) classifying the plurality of base stations into at least a first group of first base stations having a first individual value of the characteristic parameter and a second group of second base stations having a second individual value of the characteristic parameter, (b) successively broadcasting a respective identification mark for each of the first base stations of the first group, (c) broadcasting a separation symbol, and (d) successively broadcasting a respective identification mark for each of the second base stations of the second group.

This aspect of the invention is based on the idea that a plurality of individual values, wherein each value is assigned to one of the base stations of the cellular telecommunication network, can be broadcasted in a non-explicit way by defining groups of base stations depending on their individual value of the characteristic parameter. Thereby, information representing the plurality of individual values can be transmitted to the User Equipment over the Broadcast Channel (BCH) in a compressed way. Therefore, the overall transmission load between a selected base station and the User Equipments being served by the selected base station can be significantly reduced.

It has to be mentioned that of course further groups of base stations can be defined, whereby there is no fundamental limitation with respect to the number of groups. In order to separate the different groups from each other when signaling the plurality of individual values an appropriate separation symbol has to be broadcasted between the broadcast procedures of the identification marks of base stations being assigned to different groups.

The described signaling method may provide the advantage that it can be carried out in conventional mobile communication networks such as the Global System for Mobile Communications (GSM), the US Code Division Multiplex Access 2000 (CDMA 2000) system and the Universal Mobile Telecommunications System (UMTS) without requiring any new hardware being specifically adapted for the described signaling method.

According to an embodiment of the invention the plurality of base stations comprises a selected base station and further base stations neighboring the selected base station. This means that the User Equipments being served by i.e. being camped on the selected base stations can be provided with valuable information about the individual values of neighboring base stations. This information can be taken into account for handover measurements and/or for handover decisions of the User Equipment.

Since in a cellular telecommunication network each operating base station is assigned to a particular network cell, performing the described method means that an ordering of neighboring cells in a neighbor cell list is done according to certain values of a characteristic parameter of the base stations respectively of corresponding the cells of the telecommunication network.

According to a further embodiment of the invention the method further comprises collecting the individual value of the characteristic parameter for each of the further base stations by the selected base station.

Thereby, a list of values may be formed, wherein the list is a non-explicit representation of the values of the characteristic parameter for base stations neighboring the selected base station. The described list comprises an ordered sequence of base station identification marks, wherein the ordering is given by the individual values of the characteristic parameter being assigned to each base station. Due to the classification of the base stations in different groups the list is signaled in a compressed way to a plurality of User Equipments being served by the selected base station.

Preferably, the steps of (a) successively broadcasting the respective identification mark for each of the first base stations, (b) broadcasting the separation symbol, and (c) successively broadcasting the respective identification mark for each of the second base stations are carried out by the selected base station. This means that in a cellular telecommunication network each base station can signal to its User Equipments, i.e. the User Equipments being served by said base station, the individual values of the neighboring base stations and, if applicable also their own individual value. Since the described signaling is carried out in a compressed way, the overall transmission load within the whole telecommunication network can be significantly reduced.

According to a further embodiment of the invention the characteristic parameter is defined by a numerical parameter. This may provide the advantage that the identification marks of the base stations respectively of the corresponding cells can be carried out simply by following a numerical order. Thereby, the ordering of the individual values of the characteristic parameter can be performed in an ascending manner or alternatively in a descending manner.

However, it has to be mentioned that the characteristic parameter may also be a non-numerical parameter such as a string of characters. In that case it is necessary that there exists an acknowledgement respectively an agreement between the transmitting base station and the receiving User Equipment respectively the receiving User Equipments about the sequence of the non-numerical values, which are assigned to the various base stations.

In case the characteristic parameter is a non-numerical parameter, this non-numerical parameter may represent for instance the operator which is running a corresponding base station. In this respect it has to be mentioned that worldwide all operators can be identified with a unique identification number. When the operator of each base station is signaled to the User Equipments, which are candidates for a handover, the operator of the potentially next serving base station may be taken into account for promoting a handover or for impeding a handover. Of course, if the contemplable operator offers cheap rates, a handover will be promoted whereas if the contemplable operator offers expensive rates a handover will be impeded. The operator can be identified in particular by the well known Public Land Mobile Network Identifier (PLMN ID).

According to a further embodiment of the invention the characteristic parameter is an offset of a base station. The offset may be added to measurement values of a User Equipment, which are obtained by the User Equipment when measuring the transmission quality (a) between the User Equipment and the serving base station and (b) between the User Equipment and other neighboring base stations which are arranged close to the serving base station. These measurement values respectively the corresponding offset values can be taken into account by the User Equipment when deciding about performing a handover from the presently serving base station to one of the neighboring base stations.

This means that the offset, which can be either positive, zero or negative, can be conceived as a prioritization mechanism for each base station respectively for each cell. In other words, when starting from the original size of a cell being assigned to a certain base station the offset may artificially change the spatial dimension of the cell as it is assessed by the User Equipment measuring the transmission quality between itself and the certain base station.

According to a further embodiment of the invention the method further comprises broadcasting an initial value of the characteristic parameter. This may provide the advantage that the identification marks of the various base stations being assigned to different groups can be ordered with respect to the initial value. Thereby, the initial value, which may represent an appropriate reference value within a transmitted list of ordered identification marks, can be selected depending on the distribution of the various individual values.

For instance if offset values of the various base stations are supposed to be transmitted the initial value may be equal to the lowest or alternatively to the highest offset value. Thereby, the offset value may have a positive or a negative value. In case the distribution of individual offset values of the relevant base stations comprises a threshold offset value, wherein above or below this threshold value no offset values are used, the initial value may be equal to this threshold value. Thereby, unnecessary blank lines within a corresponding list of values can be avoided and, as a consequence, the data transmission load between the base station and the served User Equipments can be further reduced.

According to a further embodiment of the invention the separation symbol is a digital bitstring indicating an increment or a decrement of a numerical value of the numerical parameter. The digital bitstring may be any unique sequence of bits, which can be reliably recognized by the respective User Equipment as the separation symbol.

According to a further embodiment of the invention the digital bitstring is a single bit. This may provide the advantage that the broadcasting of the separation symbol respectively the broadcasting of the plurality of separation symbols only causes a minor contribution to the data transmission load between the broadcasting base station and the receiving User Equipment respectively the receiving User Equipments.

According to a further aspect of the invention there is provided abase station of a cellular telecommunication network. In cooperation with at least one User Equipment the provided base station is adapted to carry out the above described signaling method.

According to a further aspect of the invention there is provided a User Equipment of a cellular telecommunication network. In cooperation with at least on base station the provided User Equipment is adapted to carry out the above described signaling method.

According to a further aspect of the invention there is provided a telecommunication network. The provided telecommunication network comprises at least one base station as described above and at least one User Equipment as described above.

These three further aspects of the invention are based on the idea that a plurality of individual values, wherein each value is assigned to one of the base stations of the cellular telecommunication network, can be broadcasted in a non-explicit way by defining groups of base stations depending on their individual value of the characteristic parameter. Thereby, information representing the plurality of individual values can be transmitted to the User Equipment in a compressed way such that the overall transmission load between a selected base station and the User Equipments being served by the selected base station can be significantly reduced.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure la: shows a cellular telecommunication network, wherein one serving base station is signaling offset values for its neighboring base stations to two User Equipments.

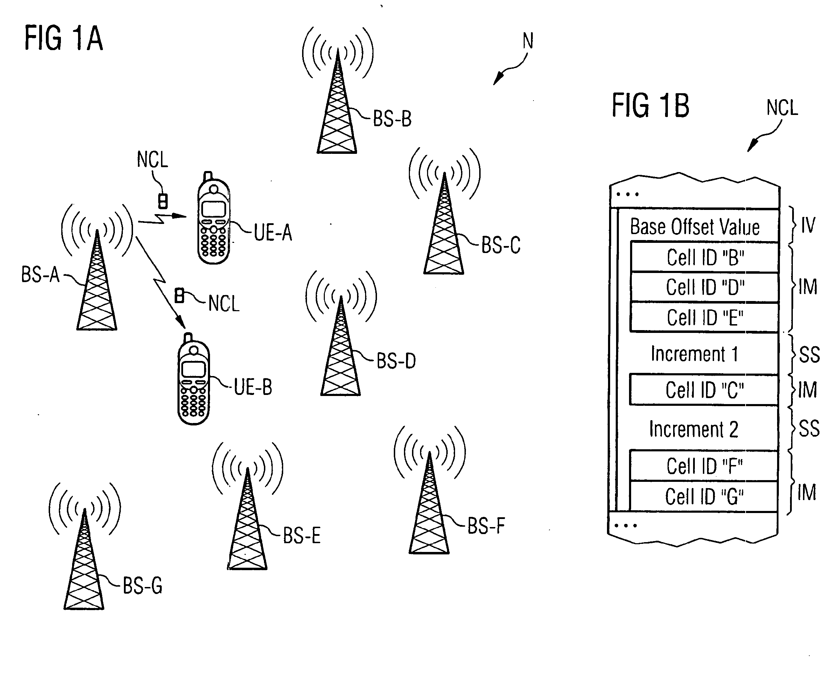

- Figure 1b: shows a neighboring cell list containing an implicit representation of offset values of neighboring base stations.

### Detailed Description

The illustration in the drawing is schematically. It is noted that in different figures, similar or identical elements are provided with the same reference signs.

Figure 1 shows a cellular telecommunication network N comprising a plurality of base stations and a plurality of User Equipments being presently served by or camped on one of the base stations. For sake of simplicity only seven base stations BS-A, BS-B, BS-C, BS-D, BS-E, BS-F and BS-G are depicted. Also for sake of clarity, only two User Equipments UE-A and UE-B, which are currently served by the base station BS-A, are depicted. In order to inform the User Equipments UE-A and UE-B about offset values about the neighboring base stations BS-B, BS-C, BS-D, BS-E, BS-F and BS-G, the serving base station BS-A broadcasts a neighbor cell list NCL comprising these offset values.

According to the embodiment described here the neighbor cell list NCL does not include these offset values in an explicit form. The neighbor cell list NCL rather comprises an implicit representation of these offset values.

The offset value is added to measurement values, which are obtained by the User Equipments UE-A, UE-B when measuring the transmission quality (a) between the User Equipment UE-A, UE-B and the serving base station BS-A and (b) between the User Equipment UE-A, UE-B and the neighboring base stations BS-B, BS-C, BS-D, BS-E, BS-F and BS-G. These measurement values respectively the corresponding offset values can be taken into account by the User Equipment UE-A, UE-B when deciding about performing a handover from the serving base station BS-A to one of the neighboring base stations BS-B, BS-C, BS-D, BS-E, BS-F and BS-G.

Figure 1b shows a neighboring cell list NCL containing an implicit representation of offset values of the neighboring base stations BS-B, BS-C, BS-D, BS-E, BS-F and BS-G. In the neighboring cell list NCL the cell IDs respectively the identification mark IM of the neighboring base stations BS-B, BS-C, BS-D, BS-E, BS-F and BS-G are grouped in a sequence per offset value. The sequences are separated by a separation symbol SS indicating an increment of the offset value. According to the embodiment described here the separation symbol SS is a single bit.

At the beginning of the sequence a base offset value respectively an initial value IV defines the starting point of the following offset values. The base offset value IV can be positive, zero or negative.

This base offset value IV may be followed by a number of cell identification marks IM, where their number may even be zero. After all cell identification marks IM, which make use of the base offset value IV, have been transmitted, the single bit separation symbol SS, acting as an increment, will be transmitted and the group of cell identification marks IM will follow, which use the incremented offset value. This sequence will be extended until all cell identification marks IM have been transmitted.

It has to be mentioned that this invention is not limited to increment offset values. The separation symbol SS could also indicate a decrement of offset values. In this case the base offset value would be the highest offset value to be applied in the telecommunication network N.

The following example shows how this sequence could look like: Base offset value - cell ID ... cell ID - single increment bit - cell ID ... cell ID - single increment bit - single increment bit - single increment bit - cell ID - single increment bit - cell ID ... cell ID.

Such an approach is feasible in particular since typically only a limited number of offset values will be defined based on a certain granularity such as for instance 0,5dB.

The described method for effectively signaling base station offset values may provide the advantage that only the change of the offset value needs to be indicated by a separation symbol, which will be interpreted as increment of the offset value. All cell IDs respectively cell identification marks following this single bit apply the same offset value until the next single bit indicates that the cell IDs following this later single bit will use the next incremented offset value.

By the described coding procedure it is not necessary to send offset values for every cell ID. Therefore, the data transmission load on the Broadcast Channel can be significantly reduced.

It should be noted that the term "comprising" does not exclude other elements or steps. Also elements described in association with different embodiments may be combined. It should also be noted that reference signs in the claims should not be construed as limiting the scope of the claims.

### List of reference signs:

- N: telecommunication network
- BS-A: base station
- BS-B: base station
- BS-C: base station
- BS-D: base station
- BS-E: base station
- BS-F: base station
- BS-G: base station
- UE-A: User Equipment
- UE-B: User Equipment
- NCL: neighbor cell list
- IV: initial value / base offset value
- IM: identification mark / cell ID
- SS: digital bitstream / separation symbol / increment symbol

## Claims

1. A method for signaling an individual value of a characteristic parameter defined by a numerical parameter, for each of a plurality of base stations (BS-A, BS-B, BS-C, BS-D, BS-E, BS-F, BS-G) of a cellular telecommunication network (N) to at least one User Equipment (UE-A, UE-B) being assigned to the telecommunication network (N), the plurality of base stations (BS-A, BS-B, BS-C, BS-D, BS-E, BS-F, BS-G) comprising a selected base station (BS-A) and further base stations (BS-B, BS-C, BS-D, BS-E, BS-F, BS-G) neighboring the selected base station (BS-A), the method comprising
• classifying by the selected base station (BS-A), the plurality of base stations (BS-A, BS-B, BS-C, BS-D, BS-E, BS-F, BS-G) into at least
- a first group of first base stations (BS-B, BS-D, BS-E) having a first individual value of the characteristic parameter and
- a second group of second base stations (BS-C) having a second individual value of the characteristic parameter,
• the selected base station (BS-A) successively broadcasting a respective identification mark (IM) for each of the first base stations (BS-B, BS-D, BS-E) of the first group,
• the selected base station (BS-A) broadcasting a separation symbol (SS), the separation symbol (SS) being a digital bitstring indicating an increment or a decrement of a numerical value of the numerical parameter and
• the selected base station (BS-A) successively broadcasting a respective identification mark (IM) for each of the second base stations (BS-C) of the second group.

2. The method according to claim 1, further comprising
• collecting the individual value of the characteristic parameter for each of the further base stations (BS-B, BS-C, BS-D, BS-E, BS-F, BS-G) by the selected base station (BS-A).

3. The method according to claim 1, wherein
the characteristic parameter is a cell individual offset of a base station (BS-A, BS-B, BS-C, BS-D, BS-E, BS-F, BS-G).

4. The method according to any one of the claims 1 to 3, further comprising
• broadcasting an initial value (IV) of the characteristic parameter.

5. The method according to claim 1, wherein
the digital bitstring is a single bit.

6. Base station of a cellular telecommunication network, wherein
in cooperation with at least one User Equipment (UE-A, UE-B) the base station (BS-A) is adapted to carry out the method as described with any one of the claims 1 to 5.

## Patentansprüche

1. Verfahren zum Signalisieren eines individuellen Werts eines charakteristischen Parameters, der durch einen numerischen Parameter definiert wird, für jede einer Vielzahl von Basisstationen (BS-A, BS-B, BS-C, BS-D, BS-E, BS-F, BS-G) eines zellularen Telekommunikationsnetzes (N) an mindestens ein Benutzergerät (UE-A, UE-B), das dem Telekommunikationsnetz (N) zugewiesen ist, wobei die Vielzahl von Basisstationen (BS-A, BS-B, BS-C, BS-D, BS-E, BS-F, BS-G) eine gewählte Basisstation (BS-A) und weitere Basisstationen (BS-B, BS-C, BS-D, BS-E, BS-F, BS-G), die der gewählten Basisstation (BS-A) benachbart sind, umfasst, mit den folgenden Schritten:
• Klassifizieren der Vielzahl von Basisstationen (BS-A, BS-B, BS-C, BS-D, BS-E, BS-F, BS-G) durch die gewählte Basisstation (BS-A) zu mindestens Folgendem:
- einer ersten Gruppe von ersten Basisstationen (BS-B, BS-D, BS-E) mit einem ersten individuellen Wert des charakteristischen Parameters und
- einer zweiten Gruppe von zweiten Basisstationen (BS-C) mit einem zweiten individuellen Wert des charakteristischen Parameters,
• sukzessives Rundsenden einer jeweiligen Identifikationsmarke (IM) durch die gewählte Basisstation (BS-A) für jede der ersten Basisstationen (BS-B, BS-D, BS-E) der ersten Gruppe,
• Rundsenden eines Trennungssymbols (SS) durch die gewählte Basisstation (BS-A), wobei das Trennungssymbol (SS) eine digitale Bitkette ist, die ein Inkrement oder ein Dekrement eines numerischen Werts des numerischen Parameters angibt, und
• sukzessives Rundsenden einer jeweiligen Identifikationsmarke (IM) durch die gewählte Basisstation (BS-A) für jede der zweiten Basisstationen (BS-C) der zweiten Gruppe.

2. Verfahren nach Anspruch 1, ferner mit dem folgenden Schritt:
• Sammeln des individuellen Werts des charakteristischen Parameters für jede der weiteren Basisstationen (BS-B, BS-C, BS-D, BS-E, BS-F, BS-G) durch die gewählte Basisstation (BS-A).

3. Verfahren nach Anspruch 1, wobei
der charakteristische Parameter ein zellenindividuelles Offset einer Basisstation (BS-A, BS-B, BS-C, BS-D, BS-E, BS-F, BS-G) ist.

4. Verfahren nach einem der Ansprüche 1 bis 3, ferner mit dem folgenden Schritt:
• Rundsenden eines Anfangswerts (IV) des charakteristischen Parameters.

5. Verfahren nach Anspruch 1, wobei die digitale Bitkette ein einziges Bit ist.

6. Basisstation eines zellularen Telekommunikationsnetzes, wobei
die Basisstation (BS-A) in Kooperation mit mindestens einem Benutzergerät (UE-A, UE-B) dafür ausgelegt ist, das Verfahren nach einem der Ansprüche 1 bis 5 auszuführen.

## Revendications

1. Un procédé de signalement d'une valeur individuelle d'un paramètre caractéristique défini par un paramètre numérique pour chacune des stations de base d'une pluralité de stations de base (BS-A, BS-B, BS-C, BS-D, BS-E, BS-F, BS-G) d'un réseau de télécommunications cellulaire (N) à au moins un équipement d'utilisateur (UE-A, UE-B) attribué au réseau de télécommunications (N), la pluralité de stations de base (BS-A, BS-B, BS-C, BS-D, BS-E, BS-F, BS-G) comprenant une station de base sélectionnée (BS-A) et d'autres stations de base (BS-B, BS-C, BS-D, BS-E, BS-F, BS-G) voisines de la station de base sélectionnée (BS-A), le procédé comprenant
• la classification par la station de base sélectionnée (BS-A) de la pluralité de stations de base (BS-A, BS-B, BS- C, BS-D, BS-E, BS-F, BS-G) en au moins
- un premier groupe de premières stations de base (BS-B, BS-D, BS-E) possédant une première valeur individuelle du paramètre caractéristique, et
- un deuxième groupe de deuxièmes stations de base (BS-C) possédant une deuxième valeur individuelle du paramètre caractéristique,
• la station de base sélectionnée (BS-A) radiodiffusant successivement une marque d'identification respective (IM) pour chacune des premières stations de base (BS-B, BS-D, BS-E) du premier groupe,
• la station de base sélectionnée (BS-A) radiodiffusant un symbole de séparation (SS), le symbole de séparation (SS) étant une chaîne de bits numériques indiquant un incrément ou un décrément d'une valeur numérique du paramètre numérique, et
• la station de base sélectionnée (BS-A) radiodiffusant successivement une marque d'identification respective (IM) pour chacune des deuxièmes stations de base (BS-C) du deuxième groupe.

2. Le procédé selon la revendication 1, comprenant en outre
• le recueil de la valeur individuelle du paramètre caractéristique pour chacune des autres stations de base (BS-B, BS-C, BS-D, BS-E, BS-F, BS-G) par la station de base sélectionnée (BS- A).

3. Le procédé selon la revendication 1, dans lequel le paramètre caractéristique est un décalage individuel de cellule d'une station de base (BS-A, BS-B, BS-C, BS-D, BS-E, BS-F, BS-G) .

4. Le procédé selon l'une quelconque des revendications 1 à 3, comprenant en outre
• la radiodiffusion d'une valeur initiale (IV) du paramètre caractéristique.

5. Le procédé selon la revendication 1, dans lequel la chaîne de bits numériques est un bit unique.

6. Une station de base d'un réseau de télécommunications cellulaire, dans laquelle
en coopération avec au moins un équipement d'utilisateur (UE-A, UE-B), la station de base (BS-A) est adaptée de façon à exécuter le procédé décrit dans l'une quelconque des revendications 1 à 5.
